# EUROPEAN PATENT SPECIFICATION

(11) **EP 3 896 572 B1**
(45) Date of publication and mention of the grant of the patent: **08.01.2025**
(21) Application number: 20169593.9
(22) Date of filing: 15.04.2020
(51) Int. Cl.: G06F 11/14, G06F 11/16, G06F 11/20, G06F 11/07, H04L 67/1034, H04L 69/40, H04L 41/5025, H04L 41/0686, H04L 41/0663, H04L 43/10, H04L 45/00, H04L 45/28, H04L 47/74, H04L 47/726

(54) **SERVER COMPUTER, METHOD FOR PROVIDING AN APPLICATION, MOBILE COMMUNICATION NETWORK AND METHOD FOR PROVIDING ACCESS TO A SERVER COMPUTER**
SERVER-COMPUTER, VERFAHREN ZUR BEREITSTELLUNG EINER ANWENDUNG, MOBILKOMMUNIKATIONSNETZWERK UND VERFAHREN ZUR BEREITSTELLUNG VON ZUGRIFF AUF EINEN SERVER-COMPUTER
ORDINATEUR SERVEUR, PROCÉDÉ DE FOURNITURE D'UNE APPLICATION, RÉSEAU DE COMMUNICATION MOBILE ET PROCÉDÉ POUR FOURNIR UN ACCÈS À UN ORDINATEUR SERVEUR

(43) Date of publication of application: 20.10.2021
(73) Proprietor: NTT DOCOMO, INC., Chiyoda-ku Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MINOKUCHI, Atsushi, Tokyo, 100-6150 (JP); KIESS, Wolfgang, 56218 Mülheim-Kärlich (DE)
(74) Representative: Viering, Jentschura & Partner mbB Patent- und Rechtsanwälte

(56) References cited:
- EP-A1- 2 403 290
- US-A1- 2007 242 604
- US-A1- 2020 110 675

## Description

The present disclosure relates to server computers, methods for providing an application, mobile communication networks and methods for providing access to a server computer.

Especially in an industrial environment, safety critical functions or operational impact systems require redundant implementations. This includes protection from issues such as power outages, lightning strikes, tornadoes, earthquakes, and more. The risk of a general failure can be reduced by having components split over different locations and/or platforms. An example is the distribution of cloud servers (e.g. for providing web services) over multiple regions such that they are physically separated.

Within a 5G communication system, redundant paths between a radio access network and a user plane function may be established. Packets are duplicated and sent via the redundant paths. This is transparent to the mobile terminal. Another redundancy mechanism is that the mobile terminal establishes redundant paths and duplicates packets itself.

With the introduction of edge computing, in particular Multi-Access Edge Computing, redundancy mechanisms for protection against failure are similarly desirable in an edge scenario.

EP 2403290 A1 discloses a mobile telecommunications network includes a core and a radio access network including control means operable to control the use of network resources by the mobile terminals. The control means may be provided at an access node site and/or a gateway site.

US 2007/0242604 A1 discloses an Application Function (AF) influenced routing for peer-to-peer (P2P) communications is provided. Core network elements correlate PDU sessions and optimize the UP path for peer-to-peer traffic.

US 2020/0110675 A1 discloses a data management and storage (DMS) cluster of peer DMS nodes manages data backup and disaster recovery using a service level agreement.

According to a first aspect of the present invention, a server computer of an arrangement of server computers according to claim 1 is provided.

According to a second aspect of the present invention, a method for providing an application to one or more mobile communication terminals according to claim 7 is provided.

According to a third aspect of the present invention, a mobile communication network according to claim 8 is provided.

According to a fourth aspect of the present invention, a method for providing one or more mobile communication terminals with access to a server computer of an arrangement of server computers according to claim 12 is provided.

Additional features for advantageous embodiments of the present invention are provided in the dependent claims.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a radio communication system.
Figure 2 shows a communication arrangement illustrating edge computing.
Figure 3 shows an edge node arrangement where edge nodes act as redundant edge nodes for other edge nodes.
Figure 4 shows a communication arrangement where a mobile terminal may communicate via a radio access network with a first edge node and a second edge node which provide redundant application servers.
Figure 5 shows a message flow diagram for notification about a redundancy edge node.
Figure 6 illustrates the fallback from an edge node to a redundancy edge node in case of failure of the edge node.
Figure 7 shows a message flow diagram illustrating a first option how a radio access network may detect that it needs to switch to a backup path for an application function.
Figure 8 shows a message flow diagram illustrating a second option how a radio access network may detect that it needs to switch to a backup path for an application function.
Figure 9 shows a message flow diagram illustrating the exchange of health check/acknowledge messages between a radio access network and an application function.
Figure 10 shows a massage flow diagram illustrating an approach for providing a backup of an application server providing a context-dependent application.
Figure 11 shows a server computer according to an embodiment.
Figure 12 shows a flow diagram illustrating a method for providing an application to one or more mobile communication terminals according to an embodiment.
Figure 13 shows a mobile communication network according to an embodiment.
Figure 14 shows a flow diagram illustrating a method for providing one or more mobile communication terminals with access to a server computer of an arrangement of server computers according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention.

In the invention according to the first aspect, the notification interface may be configured to notify a user plane component of the mobile communication network (e.g. a user plane function or a radio access network (user plane) component) or a control plane component (e.g. an Operations, Administration and Maintenance component, a Unified Data Repository, a Unified Data Management, a Session Management Function and/or a Policy Control Function) of the mobile communication network about the other server computer.

In the invention according to the first aspect, the notification interface may be configured to notify the mobile communication network about an address, a location and/or quality of service information of the other server computer.

In the invention according to the first aspect, the predetermined quality level may be that the server computer can provide the application to the one or more mobile communication terminals at a predetermined quality of service.

In the invention according to the first aspect, the server computers of the arrangement of server computers are multi access edge computing hosts.

In the invention according to the first aspect, the server computers of the arrangement of server computers may be part of the mobile communication network.

In the invention according to the first aspect, the server computers of the arrangement of server computers may be part of the Internet.

The invention according to the second aspect may include notifying a core network component of the mobile communication network about another application server provided by the other server computer, wherein the mobile communication network may use the other application server as backup for providing the application to the one or more mobile communication terminals in case the server computer fails to provide the application at the predetermined quality level.

The invention according to the second aspect may include notifying a user plane component of the mobile communication network about the other server computer which the mobile communication network may use as backup for providing the application to the one or more mobile communication terminals in case the server computer fails to provide the application at a predetermined quality level.

The invention according to the second aspect may include notifying the mobile communication network that the other server computer may be synchronized with the server computer to be able to serve as backup for providing the application to the one or more mobile communication terminals.

The invention according to the second aspect may include notifying the mobile communication network that another application server of the other server computer may be synchronized with the application server to be able to serve as backup for providing the application to the one or more mobile communication terminals.

The invention according to the second aspect may include notifying a user plane component of the mobile communication network (e.g. a user plane function or a radio access network (user plane) component) or a control plane component (e.g. an Operations, Administration and Maintenance component, a Unified Data Repository, a Unified Data Management, a Session Management Function and/or a Policy Control Function) of the mobile communication network about the other server computer..

The invention according to the second aspect may include notifying the mobile communication network about an address, a location and/or quality of service information of the other server computer.

In the invention according to the second aspect, the predetermined quality level may be that the server computer can provide the application to the one or more mobile communication terminals at all.

In the invention according to the second aspect, the predetermined quality level may be that the server computer can provide the application to the one or more mobile communication terminals at a predetermined quality of service.

In the invention according to the second aspect, the server computers of the arrangement of server computers implement edge nodes.

In the invention according to the second aspect, the server computers of the arrangement of server computers may be multi access edge computing hosts.

In the invention according to the second aspect, the server computers of the arrangement of server computers may be part of the mobile communication network.

In the invention according to the second aspect, the server computers of the arrangement of server computers are part of the Internet.

In the invention according to the third aspect, the radio access network may be configured to store information from the notification about the other server computer of the arrangement of server computers as part of session context information of the one or more mobile communication terminals.

The invention according to the third aspect may include a detector configured to detect whether the server computer fails to provide the application at the predetermined quality level.

The invention according to the fourth aspect may include storing information from the notification about the other server computer of the arrangement of server computers as part of session context information of the one or more mobile communication terminals.

The invention according to the fourth aspect may include detecting whether the server computer fails to provide the application at the predetermined quality level.

In the invention according to the fourth aspect, the predetermined quality level may be that the server computer can provide the application to the one or more mobile communication terminals at all and wherein the method includes detecting whether the server computer can provide the application to the one or more mobile communication terminals at all by exchanging health check messages and health acknowledge messages with the server computer.

In the invention according to the fourth aspect, the predetermined quality level may be that the server computer can provide the application to the one or more mobile communication terminals at a predetermined quality of service and wherein the method includes detecting whether the server computer may provide the application to the one or more mobile communication terminals at the predetermine quality of service by exchanging quality of service status messages with the server computer.

The invention according to the fourth aspect may include controlling the radio access network to establish an inactive backup path to the other server computer for providing the application to the one or more mobile communication terminals and switching the backup path to active in case the server computer fails to provide the application at the predetermined quality level.

In the invention according to the fourth aspect, the notification may include information that the other server computer should be synchronized with the server computer to be able to serve as backup for providing the application to the one or more mobile communication terminals and the method may include synchronizing the server computer with the other server computer if the other server computer should be synchronized with the server computer to be able to serve as backup for providing the application to the one or more mobile communication terminals.

According to further aspects of the invention, a computer program and a computer readable medium including instructions, which, when executed by a computer, make the computer perform methods of claim 7 or 12 are provided.

In the following, various embodiments will be described in more detail.

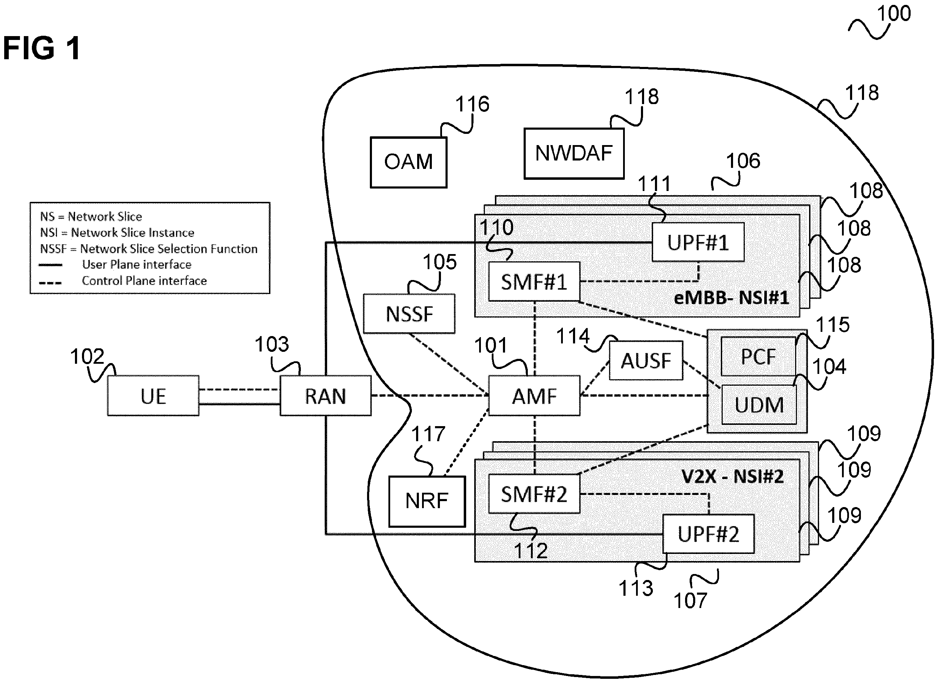

Figure 1 shows a radio communication system 100, e.g. a 5G communication network as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile (radio) communication network (e.g. a Public Land Mobile communication network PLMN). Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. Wi-Fi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 (which may be paired with a Unified Data Repository (UDR)) and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

Further, the radio communication system 100 may include a NWDAF (Network Data and Analytics Function) 118.

Edge Computing (EC) is a paradigm that allows distributing the computing power, networking and storage capabilities across the cellular network and closer to the mobile terminal. One example to realize the EC is via Multi-access edge computing (MEC) technology, formerly mobile edge computing, which is an ETSI-defined network architecture concept that enables cloud computing capabilities and an IT service environment at the edge of a cellular network such as the radio communication system 100. The basic idea behind MEC is that by running applications and performing related processing tasks closer to a UE 101, network congestion and latency are reduced and applications perform better. MEC technology may be implemented at cellular base stations (e.g. of RAN 103) or other edge nodes, and enables flexible and rapid deployment of new applications and services for customers. Combining elements of information technology and telecommunications networking, MEC also allows cellular operators to open their radio access network (e.g. RAN 103) to authorized third parties, such as application developers and content providers. Here, MEC is taken as an example, however, other technologies are available to implement edge computing mechanism e.g. KubeEdge.

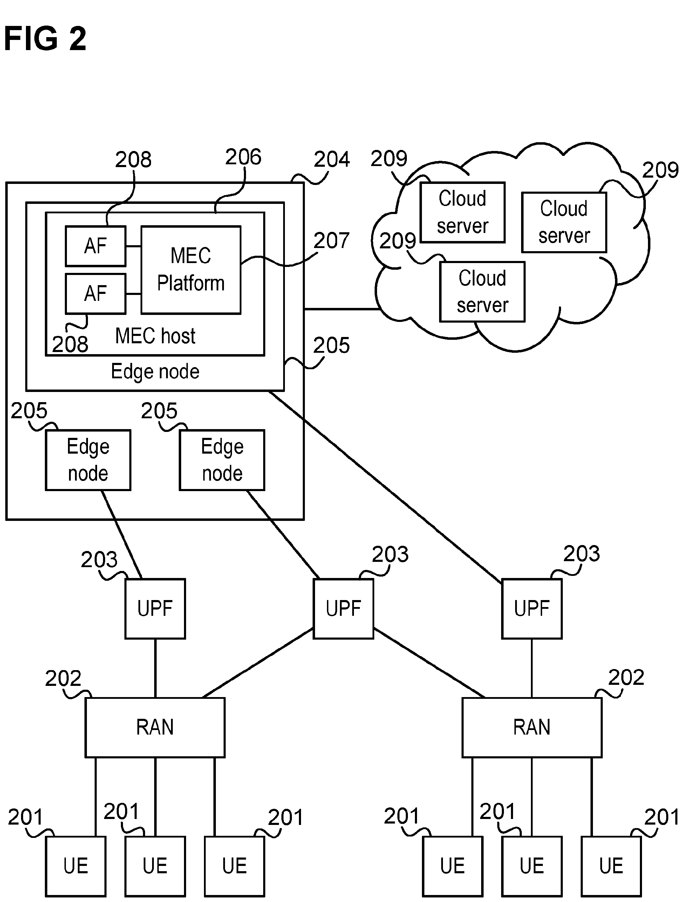

Figure 2 shows a communication arrangement 200 illustrating edge computing.

The communication arrangement 200 includes edge devices 201, e.g. being each implemented by a UE corresponding to UE 101.

The edge devices 201 are coupled via one or more RANs 202 (e.g. corresponding to RAN 101) and via one or more UPFs 203 (e.g. corresponding to UPFs 111, 113) to an edge 204, i.e. an arrangement of one or more edge nodes 205.

Communication between a UE 201 and an edge node 205 is controlled and managed by the mobile communication network control plane, e.g. including an AMF 101, an SMF 110, 112, a PCF 115 as well as a NEF (Network Exposure Function).

The edge 204 may be part of the mobile communication network including the RAN(s) 202 and UPF(s) 203 or may be separate from it. This may in particular mean that the edge 204 may be maintained by the same operator as the operator of the mobile communication network or may be maintained by another edge provider.

In any case, the edge nodes 205 are typically arranged geographically close to the RAN(s) 202, e.g. closer than one or more cloud servers 209 (which may be part of the Internet). Nevertheless, the edge 204 may include multiple edge nodes 205 which are placed in different geographical locations (i.e. which are implemented by computers which are at different locations).

As illustrated for one of the edge nodes 205, each edge node 205 implements a hosting environment 206 which embeds both an hosting platform (e.g. MEC platform) 207 and application servers 208 (also referred to as application functions, in particular according to 5G terminology). This means that an edge node 205 can be a MEC host environment. Each edge node 205 is for example identified by an N6 interface (interface between UPF and data network) and/or a DNAI (Data Network Access Identifier). Each edge node 205 is connected to a UPF 203 (e.g. an Anchor UPF or an Intermediate UPF). The UEs 201 may consume application services hosted on the edge nodes 205 (i.e. applications provided by application servers 208) by means of a corresponding application client. Specifically, for consuming an application (i.e. using the application by means of a corresponding client on the UE), a UE 201 establishes a session with the corresponding (server-side) application 208. So, the application server is communicating with mobile network components.

In case one application server 208 fails only one application will be impacted. In case the MEC platform 207 fails, all applications handled by the platform will be impacted.

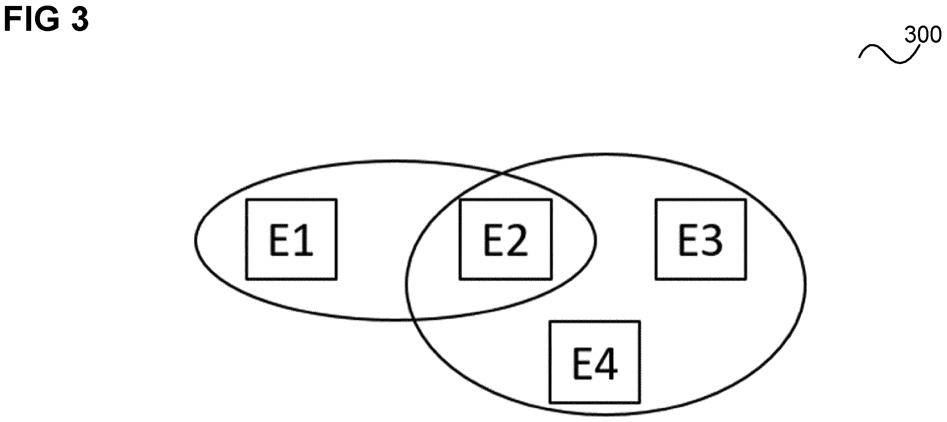

For ensuring that a UE 201 may continue using an application (i.e. consuming the respective application service) even if an application server 208 or a MEC platform 207 fails, e.g. based on a business agreement, each edge node 205 may have one or more redundant edge nodes as illustrated in figure 3.

Figure 3 shows an edge node arrangement 300 where an edge node E2 (e.g. running a redundant application server A1') acts as redundant edge node for edge node E1 (e.g. running an application server A1) and edge nodes E2 acts as redundant edge nodes for edge node E3.

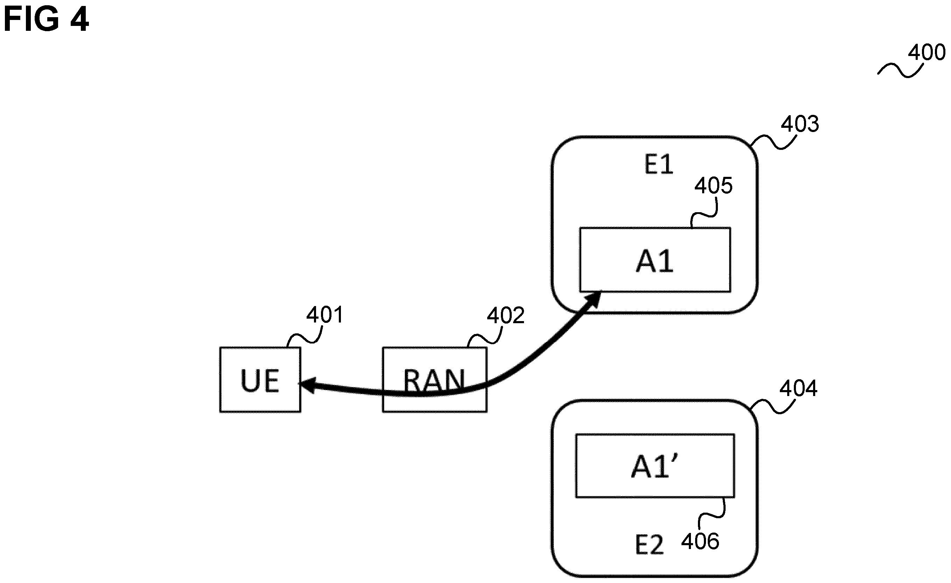

Figure 4 shows a communication arrangement 400 where a UE 401, e.g. corresponding to a UE 201, may be connected via a RAN 402, e.g. corresponding to a RAN 202, with a first edge node E1 403 and a second edge node E2 404 which provide redundant application servers A1 405 and A1' 406.

The application server A1 405 (hosted by the first edge node E1) and the application server A1' 406 (hosted by the second edge node E2) are redundant instances of an application server for an application client in the UE 401. The edge nodes E1 and E2 are placed in different locations connected by a communication network.

In the following, approaches are described how the mobile communication network (e.g. a RAN 202 or a UPF 203) detects that an application server (e.g. application server A1 403) has failed. Further, actions are described which are performed to swap the traffic (related to the application) after failure detection, e.g. from application server A1 403 to application server A1' 404.

It should be noted that a failure of an application server (e.g. A1) may be originated by a failure of the hosting platform or the whole edge node E1 403. In any case, from the mobile communication network viewpoint, the subject of the failure detection is the application server.

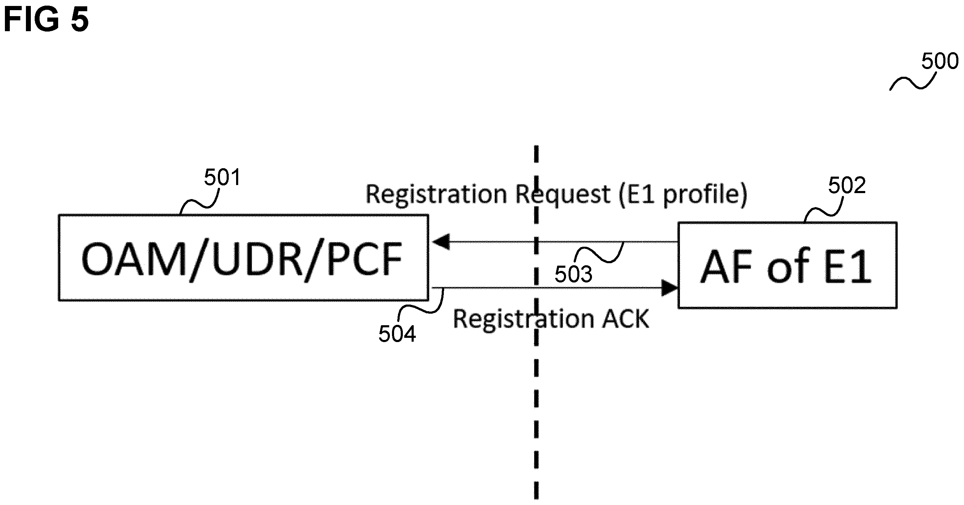

According to an embodiment, when an edge node (e.g. E1 in figure 4) has a redundant edge node (e.g. E2), the edge node (e.g. an application server of the edge node) provides redundant edge details to the mobile communication network, in particular the mobile communication network's core network, as it is illustrated in figure 5.

Figure 5 shows a message flow diagram 500.

A core network component 501 of a mobile communication network, e.g. the mobile communication network including RAN(s) 202 and UPF(s) 203, and an application function 502, e.g. of edge node E1 403 or application server A1 405 of figure 4, are involved in the flow.

In 503, the application function 502 (or generally the edge node, e.g. E1) sends an edge node profile "E1 profile" or an application profile "A1 profile" during the registering of the edge node or application with the mobile communication network.

The edge node profile includes one or more following:
- Edge node (E1) identity or identities (e.g. unique ID is allocated by an operator during SLA (Service Level Agreement))
- Edge node (E1) serving area (e.g. geographical area, TAIs (Tracking Area Identities), etc.,)
- Edge node (E1) type and supported application type
- Reliability profile
   - Redundancy edge node (E2) Profile (which E1 for example gets during SLA with E2)
      - Redundancy edge node (E2) address, location, QoS information
   - Redundancy types

The application server profile includes one or more following:
- Application server (A1) identity or identities (e.g. unique ID is allocated by an operator during SLA (Service Level Agreement))
   - Edge node (E1) serving area (e.g. geographical area, TAIs (Tracking Area Identities), etc.,) of an application server
- Reliability profile
   - Application server (A1') Profile
      - Redundancy edge node (E2) address (e.g. IP address, network end-point address), location, QoS information
   - Redundancy types

It should be noted that the mobile communication network pay perform discovery of a redundance edge node (e.g. E2 in case E1 or A1 fails) based on the other application server (e.g. A1') address (using domain name service (DNS)). Further, the interface between mobile communication network and application server can be transparent to the edge like a virtual point two point link.

In 504, the core network component 501 acknowledges the registration.

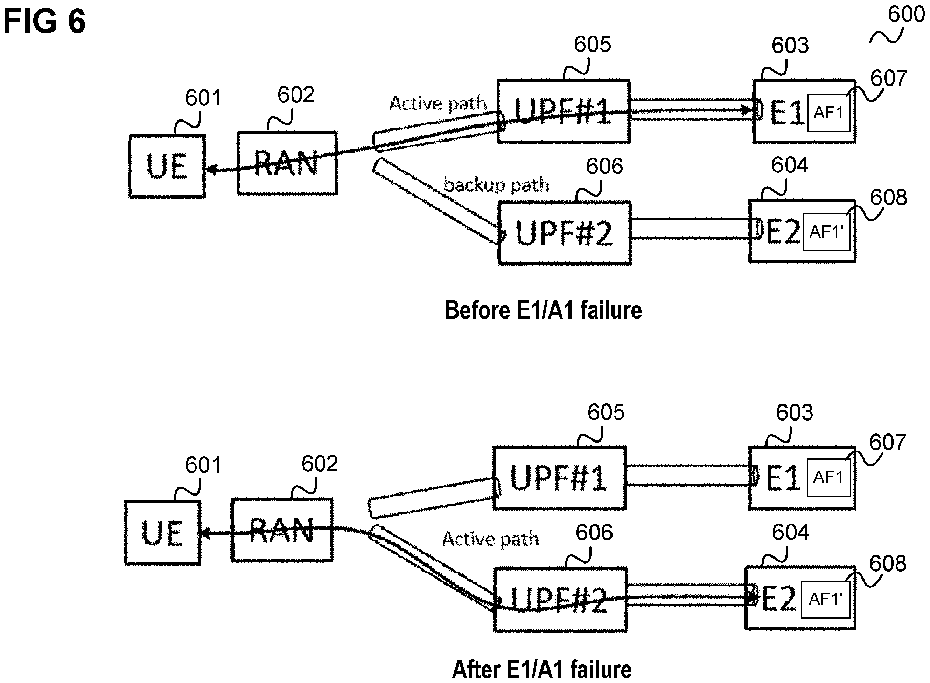

Figure 6 illustrates the fallback from an edge node E1 603 to a redundancy edge node 604 in case of failure of the edge node E1 (e.g. a platform failure or an AF failure).

A UE 601 has a communication session with the application server A1 in the edge node E1 via a RAN 602 and a first UPF 605 for consuming an application provided by an AF A1 607 of the edge node E1. The redundancy edge node 604 includes a corresponding AF A1' 608 for providing the application.

The UE 601 for example corresponds to UE 401, the RAN 602 for example corresponds to RAN 402 and the edge nodes 603, 604 for example correspond to edge nodes 403, 404.

The UE 601 has for example a PDU session with the application server A1 in the edge node E1 603.

During the establishment of the PDU session, the corresponding SMF (i.e. session controller) determines that the PDU session requires redundancy and thus that it needs to create active and backup paths for the session. The determination is for example based on the policies provided by PCF for the PDU Session, local redundant policy for DNN or alternatively DNAI or information provided by the OAM (e.g. configured policy in the SMF). For example, a PCF (i.e. policy manager) determines the session policy and charging policy based on the reliability profile of an edge or A1 profiles, after provides the reliability policy to the SMF (which it itself can be for example knows from the flow of figure 5). Thus, based on E1's edge node profile or A1's profile, the SMF selects both the active UPF 605 as well as a backup UPF 606. The SMF indicates the redundancy policy to the RAN 602 so that the RAN can create active and backup path tunnel information.

Thus, the SMF and the RAN 602 allocate both an active path (via UPF 605) and a backup path (vie backup UPF 606) for the session. The backup path is only established and is in sleep mode (not active) to save network resources until the edge node E1 fails. This situation, before failure of the edge node E1 (or AF A1 607) 603, is illustrated on the top half of figure 6.

The SMF may for example provide a reliability priority list to the RAN 602 during the PDU Session Establishment. An example is given in table 1, wherein ARP refers to Allocation and Retention Policy.

**Table 1**

| Priority | QoS Profile | ARP | Target node of PDU session | Application server details | Edge details |
|---|---|---|---|---|---|
| 1 | QFI#2 | High | UPF#1 (TEID#1) | A1 address (e.g. IP address) | E1 address |
| 2 | QFI#1 | High | UPF#2 (TEID#2) | A1' address | E2 address |

The RAN 602 may store this reliability priority list as part of the UE PDU Session context. The reliability priority list includes multiple priority orders with N3 interface information. In case of handover, this list is forwarded to the target RAN.

If the RAN 602 detects that the edge node E1 (or the respective AF A1 607) has failed, the RAN switches to the backup path to route the traffic to the redundancy edge node E2 (i.e. specifically to A1' 608). This situation is illustrated in the bottom half of figure 6. In this case, all downlink and uplink traffic, the RAN can perform Network Address Translation (NAT) for backup path traffic. For example, RAN can spoof A1 address for downlink traffic and/or replace A1 address with A1' address for uplink traffic.

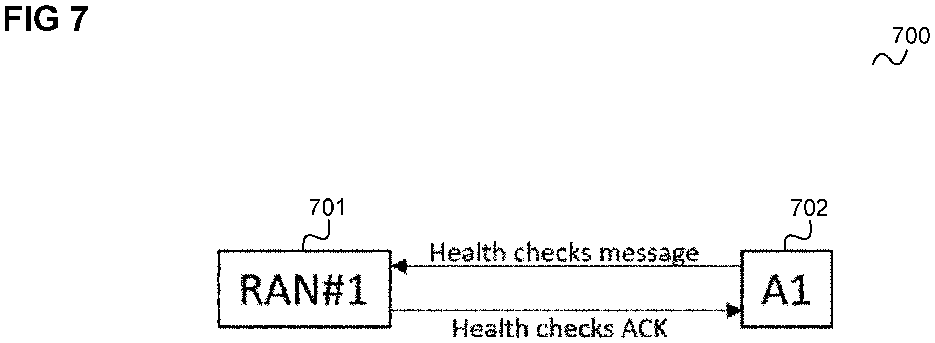

Figure 7 shows a message flow diagram 700 illustrating a first option how a RAN 701, e.g. corresponding to RAN 602, may detect that it needs to switch to a backup path for an application function 702, e.g. corresponding to application function 607.

In this embodiment, the RAN 701 and the application function 702 (e.g. A1) periodically exchange health check/acknowledge messages (like Echo (request) messages or keep-alive messages) 703, 704. If the RAN 701 determines that the application function 702 is down, because it does not send a health check/acknowledge message or does not response with a health check acknowledgement, then a respective node (component) of the RAN 701 activates the backup path and exchanges traffic between the one or more UEs using the application function 702 and the application function over the backup path.

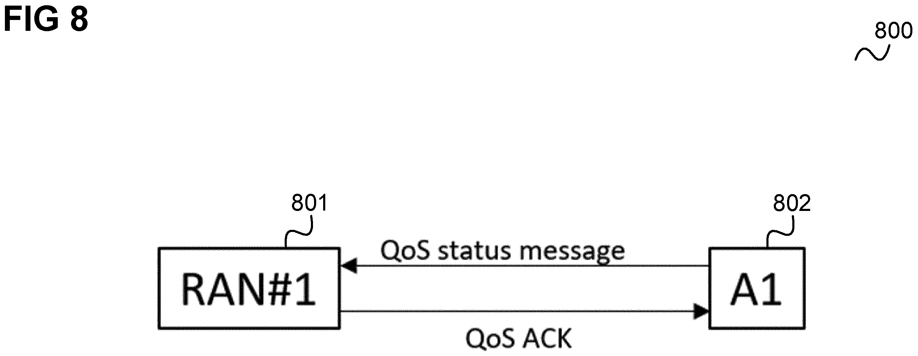

Figure 8 shows a message flow diagram 800 illustrating a second option how a RAN 801, e.g. corresponding to RAN 602, may detect that it needs to switch to a backup path for an application function 802, e.g. corresponding to application function 607.

In this embodiment, the RAN 801 and the application function 802 periodically exchange QoS status messages (like path measurement message and messages related to AF (e.g. A1) conditions (e.g. congestions)).

If the RAN 801 determines that the application function 802 cannot meet the required SLA, because its QoS status is not sufficient, then a respective node (component) of the RAN 801 activates the backup path and exchanges traffic between the one or more UEs using the application function 802 and the application function over the backup path.

For example, similarly to a QoS Monitoring Packet (QMP) indicator in GTP-U (GPRS Tunnelling Protocol-User), the edge node containing the application function 802 sends a QoS packet to the RAN 801.

Regarding health check/acknowledge messages, to realize in the 5G network, the current GTP specification defines an Extension Header field to transmit control messages. According to one embodiment, this extension header is used for exchanging health checks messages between UE and RAN e.g. as PDU Session Container.

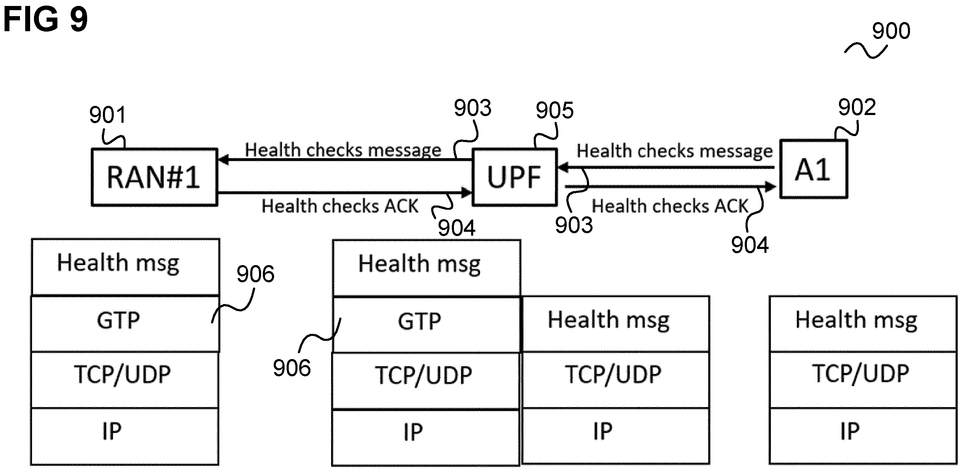

Figure 9 shows a message flow diagram 900 illustrating the exchange of health check/acknowledge messages 903, 904 between a RAN 901 and an application function 902 via a UPF 905 using GTP-U.

Between the RAN 901 and the UPF 905 the health check/acknowledge messages 903, 904 are exchanged using GTP-U, i.e. with a GTP header 906. Between the UPF 905 and the application function 902, the health check/acknowledge messages 903, 904 are exchanged without GTP header (but still on the user plane).

The respective SMF provides a Packet Detection Rule and a Forwarding Action Rule to the UPF 905 for the health check/acknowledge messages 903, 904.

In the above examples, it was assumed that the application provided by the application function is a context independent application. This means that in order to compute the result or send the response to a query by a UE, the application server does not need to rely on the past context or data. For example, a real-time application like a safety monitoring application does not require past context or data, the application server can compute a video frame by frame and notify any safety information (without knowledge from the past). Another application is a website (accessed by a browser application on the client side).

However, an application function of an edge node may also provide an application which is of the category of context-dependent applications. For providing the result or send the response to a query of a UE regarding such an application, the application function has to rely on past context or data. For example, manoeuvre coordination in autonomous driving requires location context and data of surrounding vehicles.

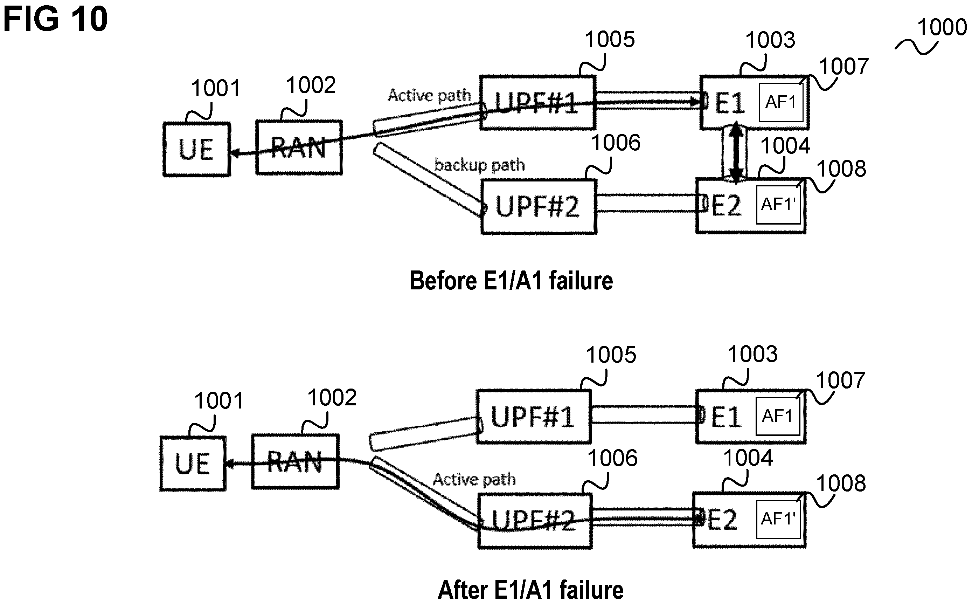

Figure 10 shows a massage flow diagram 1000 illustrating an approach for providing a backup of an application server providing a context-dependent application.

Similarly to figure 6, there is an edge node E1 1003 associated with a redundancy edge node 1004 to serve as backup in case of failure of the edge node E1 (e.g. a platform failure or an AF failure) . A UE 1001 has a communication session with the application server A1 via a RAN 1002 and a first UPF 1005 for consuming an application provided by an AF A1 1007 of the edge node E1. The redundancy edge node 1004 includes a corresponding AF A1' 1008 for providing the application.

The UE 1001 for example corresponds to UE 401, the RAN 1002 for example corresponds to RAN 402 and the edge nodes 1003, 1004 for example correspond to edge nodes 1003, 1004.

In contrast to the approach of figure 6 (which is for a context-independent application), the application is assumed to be a context-dependent application. Therefore, in this approach, the edge nodes E1, E2 have a dedicated link 1009 for context synchronization i.e. A1 and A1' use this link for context synchronization. In other word, A1 and A1' have a dedicated link via E1 and E2.

The edge node E1 or application server A1 may provide whether it requires a dedicated link 1009 with its reliability cluster node (i.e. its redundancy edge node E2) in its edge node profile or application profile as explained with reference to figure 5.

For example, its edge node profile includes, as part of redundancy type information, that it requires a dedicated link with edge serer E2.

The other elements of the fallback procedure may be similar as the one of the approach for context-independent applications described above (in particular with reference to figure 6).

It should be noted that in all approaches (irrespective of whether for context-dependent or context-independent applications) the UE does not have an impact on the reliability mechanism, i.e. the mechanism for providing a backup application server is transparent to the UE.

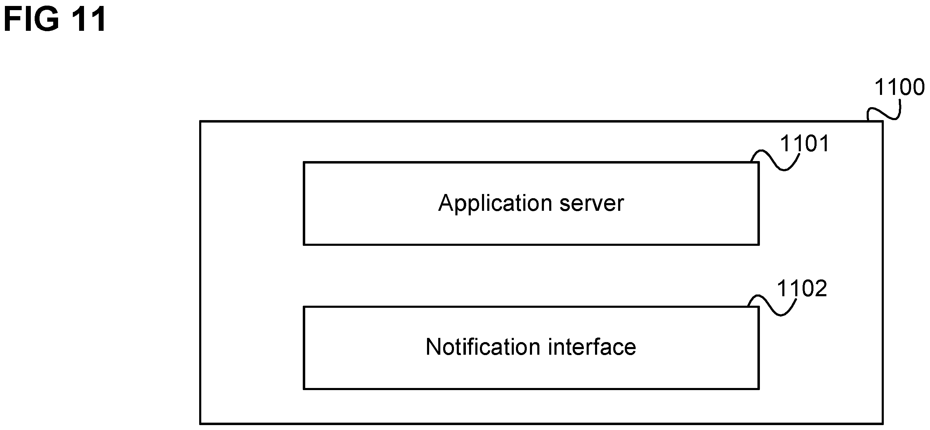

In summary, according to various embodiments, a communication server computer is provided as illustrated in figure 11.

Figure 11 shows a server computer 1100 according to an embodiment.

The server computer 1100 is a server computer of an arrangement of server computers (e.g. an edge). The server computer may for example implement an edge server and/or an application server. In particular, the server computer may be an edge server computer or an application server computer.

The server computer 1100 includes at least one application server 1101 configured to provide an application to one or more mobile communication terminals accessing the application server via a radio access network of a mobile communication network. The server computer 1100 may include multiple application servers 1101 configured to provide a respective application in this manner. The application server 1101 may correspond to an edge node (possibly including further application servers).

The server computer 1100 further includes a notification interface 1102 configured to notify the mobile communication network about another server computer of the arrangement of server computers which the mobile communication network may use as backup for providing the application to the one or more mobile communication terminals in case the server computer fails to provide the application at a predetermined quality level.

According to various embodiments, in other words, a server computer indicates to a mobile communication network another server computer (which is for example at a different geographical location, e.g. in a different building and one or more kilometres away) which can serve as a backup for providing an application to one or more mobile communication terminals.

The component or components of the mobile communication network which the server computer notifies may for example include a core network component of the mobile communication network, e.g. a network function.

The mobile communication network may detect in case the server computer fails to provide this application (at all or at a certain minimum quality level) for any cause, e.g. because the server computer has failed, the application server providing the application in the server computer has failed or the connection to the server computer has failed or has become too bad, and may switch to the other server computer (e.g. reroute traffic related to the application). The mobile communication network may thus perform network-application coordination to handle the application reliability (e.g. edge-to-edge reliability) without mobile communication terminal (e.g. UE) impact. A server computer may be understood as a device, e.g. a device having its own housing (separate from the other server computers). The server computer and the other computers may be separate in the sense that they are functionally complete computers (in particular, they do not share resources such as a system memory or a processor).

For example, a UE has a communication with an application server which runs on top of edge. The application server notifies one or more core network control plane functions about a redundancy application server (i.e an application server which can serves as backup). The core network functions informs the radio access network about two sessions and establish both a backup session and an active session based on the information provided by the application server. The radio access network and the application server exchange health-check messages and detect a failure or QoS failure of the application server. In case of a failure or QoS failure (i.e. QoS not satisfied), the radio access network switches to the redundancy application server.

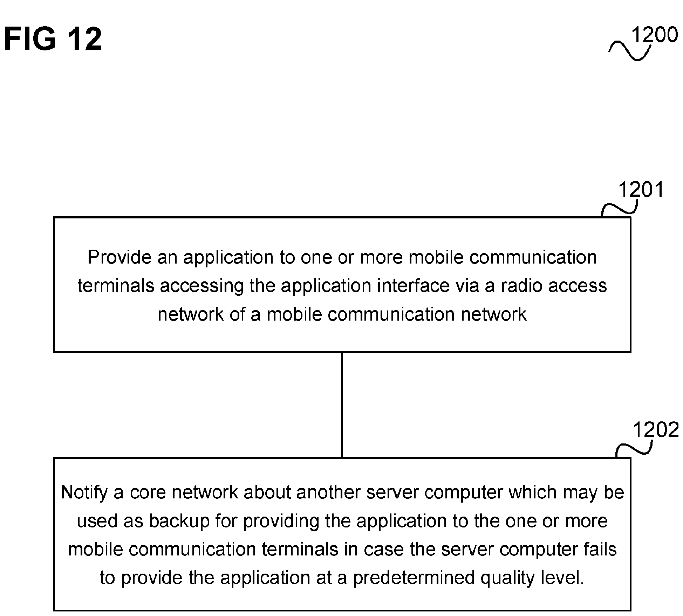

The server computer for example carries out a method as illustrated in figure 12.

Figure 12 shows a flow diagram 1200 illustrating a method for providing an application to one or more mobile communication terminals according to an embodiment.

In 1201, a server computer of an arrangement of server computers provides an application to one or more mobile communication terminals accessing the application server via a radio access network of a mobile communication network.

In 1202, the mobile communication network is notified about another server computer of the arrangement of server computers which the mobile communication network may use as backup for providing the application to the one or more mobile communication terminals in case the server computer fails to provide the application at a predetermined quality level.

It should be noted that the notification may happen before the application is provided, i.e. 1202 may take place before (or at the same time) as 1201.

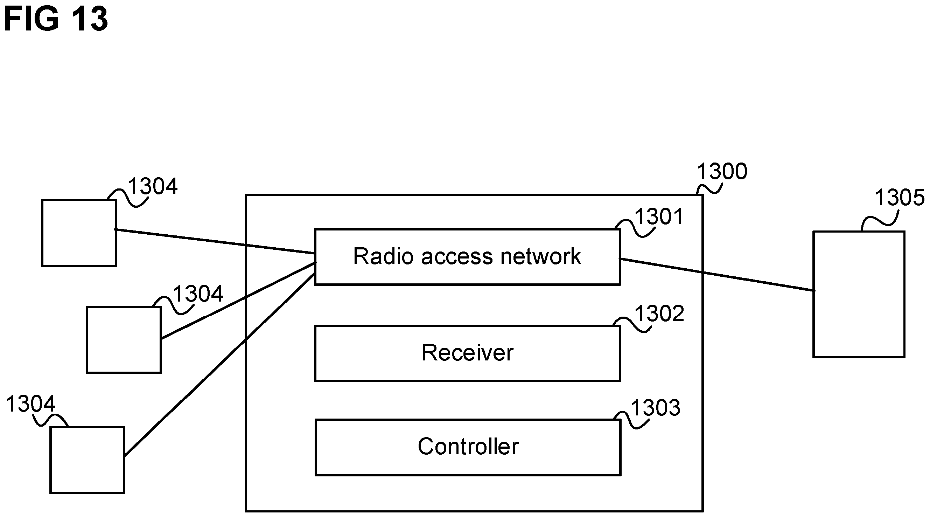

The mobile communication network is for example configured as explained in the following with reference to figure 13.

Figure 13 shows a mobile communication network 1300 according to an embodiment.

The mobile communication network 1300 includes a radio access network 1301 configured to provide a connection between one or more mobile communication terminals 1304 and a server computer 1305 of an arrangement of server computers for providing of an application to the one or more mobile communication terminals.

The mobile communication network 1300 further includes a receiver 1302 configured to receive a notification about another server computer of the arrangement of server computers which the mobile communication network may use as backup for providing the application to the one or more mobile communication terminals in case the server computer fails to provide the application at a predetermined quality level.

Further, the mobile communication network 1300 includes a controller 1303 configured to control the radio access network to provide a connection to the other server computer for providing the application to the one or more mobile communication terminals in case the server computer fails to provide the application at the predetermined quality level.

The controller 1302 may be a component of the radio access network but it may also be a network function of the mobile communication network's core network.

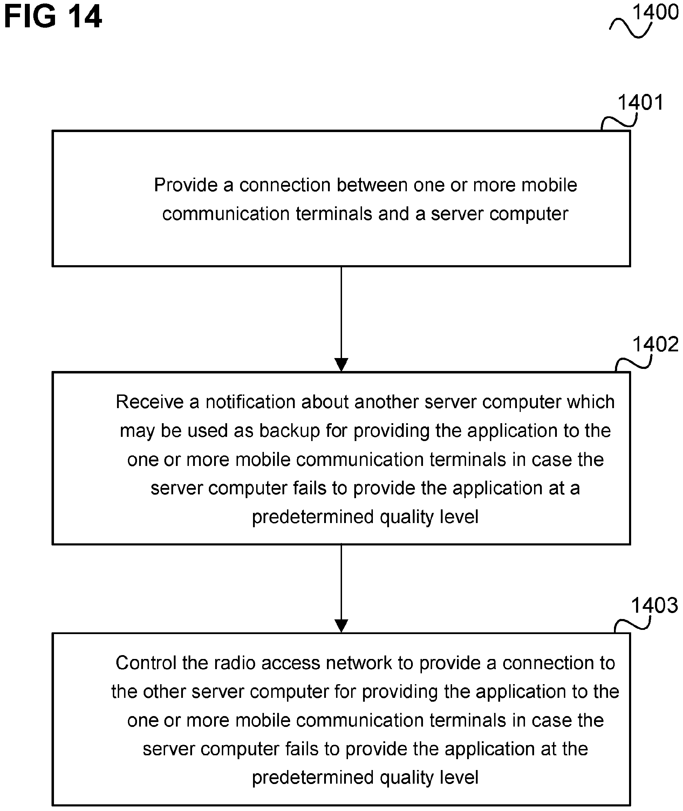

The mobile communication network for example carries out a method as illustrated in figure 14.

Figure 14 shows a flow diagram 1400 illustrating a method for providing one or more mobile communication terminals with access to a server computer of an arrangement of server computers according to an embodiment.

In 1401, a connection between the one or more mobile communication terminals and the server computer is provided for providing of an application to the one or more mobile communication terminals by a radio access network.

In 1402, a notification is received about another server computer of the arrangement of server computers which the mobile communication network may use as backup for providing the application to the one or more mobile communication terminals in case the server computer fails to provide the application at a predetermined quality level.

In 1403, the radio access network is controlled to provide a connection to the other server computer for providing the application to the one or more mobile communication terminals in case the server computer fails to provide the application at the predetermined quality level.

The components of the server computer and the mobile communication network (e.g. the application server, the radio access network, receiver and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A server computer (1100, 1305) of an arrangement of server computers, comprising:
at least one application server (208, 1101) configured to provide an application to one or more mobile communication terminals (102, 201, 1304) accessing the application server (208, 1101) via a radio access network (103, 202, 1301) of a mobile communication network (1300); and
a notification interface (1102) configured to notify a core network component (501) of the mobile communication network (1300) about another server computer of the arrangement of server computers which the mobile communication network (1300) may use as backup for providing the application to the one or more mobile communication terminals (102, 201, 1304) in case the server computer (1100, 1305) fails to provide the application to the one or more mobile communication terminals (102, 201, 1304) at a predetermined quality level.

2. The server computer (1100, 1305) of claim 1, wherein the notification interface (1102) is configured to notify the core network component (501) of the mobile communication network (1300) about another application server provided by the other server computer, wherein the mobile communication network (1300) may use the other application server as backup for providing the application to the one or more mobile communication terminals (102, 201, 1304) in case the server computer (1100, 1305) fails to provide the application at the predetermined quality level.

3. The server computer (1100, 1305) of claim 1 or 2, wherein the notification interface (1102) is configured to notify the core network component (501) of the mobile communication network (1300) that the other server computer should be synchronized with the server computer (1100, 1305) to be able to serve as backup for providing the application to the one or more mobile communication terminals (102, 201, 1304).

4. The server computer (1100, 1305) of any one of claims 1 to 3, wherein the notification interface (1102) is configured to notify the core network component (501) of the mobile communication network (1300) that another application server of the other server computer should be synchronized with the application server (208, 1101) to be able to serve as backup for providing the application to the one or more mobile communication terminals (102, 201, 1304).

5. The server computer (1100, 1305) of any one of claims 1 to 4, wherein the predetermined quality level is that the server computer (1100, 1305) can provide the application to the one or more mobile communication terminals (102, 201, 1304) at all.

6. The server computer (1100, 1305) of any one of claims 1 to 5, wherein the server computers (1100, 1305) of the arrangement of server computers implement edge nodes (205).

7. A method for providing an application to one or more mobile communication terminals (102, 201, 1304) comprising:
providing access to a server computer (1100, 1305) of an arrangement of server computers providing (1201) an application to the one or more mobile communication terminals (102, 201, 1304) accessing the application server (208, 1101) via a radio access network (103, 202, 1301) of a mobile communication network (1300); and
notifying (1202) a core network component (501) of the mobile communication network (1300) about another server computer of the arrangement of server computers which the mobile communication network (1300) may use as backup for providing the application to the one or more mobile communication terminals (102, 201, 1304) in case the server computer (1100, 1305) fails to provide the application to the one or more mobile communication terminals (102, 201, 1304) at a predetermined quality level.

8. A mobile communication network (1300) comprising:
a radio access network (103, 202, 1301) configured to provide a connection between one or more mobile communication terminals (102, 201, 1304) and a server computer (1100, 1305) of an arrangement of server computers for providing of an application to the one or more mobile communication terminals (102, 201, 1304);
a receiver (1302) configured to receive from the server computer (1100, 1305) of the arrangement of server computers a notification about another server computer of the arrangement of server computers which the mobile communication network (1300) may use as backup for providing the application to the one or more mobile communication terminals (102, 201, 1304) in case the server computer (1100, 1305) fails to provide the application at a predetermined quality level, wherein the receiver (1302) is a component of a core network component (501) of the mobile communication network (1300);
a controller (1303) configured to control the radio access network (103, 202, 1301) to provide a connection to the other server computer for providing the application to the one or more mobile communication terminals (102, 201, 1304) in case the server computer (1100, 1305) fails to provide the application to the one or more mobile communication terminals (102, 201, 1304) at the predetermined quality level; and
a detector configured to detect whether the server computer (1100, 1305) can provide the application to the one or more mobile communication terminals (102, 201, 1304) at the predetermined quality of service by exchanging quality of service status messages with the server computer (1100, 1305).

9. The mobile communication network (1300) of claim 8, wherein the predetermined quality level is that the server computer (1100, 1305) can provide the application to the one or more mobile communication terminals (102, 201, 1304) at all and wherein the detector is further configured to detect whether the server computer (1100, 1305) can provide the application to the one or more mobile communication terminals (102, 201, 1304) at all by exchanging health check messages (903) and health acknowledge messages (904) with the server computer (1100, 1305).

10. The mobile communication network (1300) of claim 8 or 9, wherein the controller is configured to control the radio access network (103, 202, 1301) to establish an inactive backup path to the other server computer for providing the application to the one or more mobile communication terminals (102, 201, 1304) and to switch the backup path to active in case the server computer (1100, 1305) fails to provide the application at the predetermined quality level.

11. The mobile communication network (1300) of any one of claims 8 to 10, wherein the notification comprises information that the other server computer should be synchronized with the server computer (1100, 1305) to be able to serve as backup for providing the application to the one or more mobile communication terminals (102, 201, 1304) and the mobile communication network (1300) comprises a synchronizing component configured to synchronize the server computer (1100, 1305) with the other server computer if the other server computer should be synchronized with the server computer (1100, 1305) to be able to serve as backup for providing the application to the one or more mobile communication terminals (102, 201, 1304).

12. A method for providing one or more mobile communication terminals (102, 201, 1304) with access to a server computer (1100, 1305) of an arrangement of server computers comprising:
providing (1401) a connection between the one or more mobile communication terminals (102, 201, 1304) and the server computer (1100, 1305) for providing an application to the one or more mobile communication terminals (102, 201, 1304) by a radio access network (103, 202, 1301) of a mobile communication network (1300);
receiving (1402) from the server computer (1100, 1305) of the arrangement of server computers at a core network component of the mobile network a notification about another server computer of the arrangement of server computers which the mobile communication network (1300) may use as backup for providing the application to the one or more mobile communication terminals (102, 201, 1304) in case the server computer (1100, 1305) fails to provide the application at a predetermined quality level;
controlling (1403) the radio access network (103, 202, 1301) to provide a connection to the other server computer for providing the application to the one or more mobile communication terminals (102, 201, 1304) in case the server computer (1100, 1305) fails to provide the application to the one or more mobile communication terminals (102, 201, 1304) at the predetermined quality level; and
detecting whether the server computer (1100, 1305) can provide the application to the one or more mobile communication terminals (102, 201, 1304) at the predetermined quality of service by exchanging quality of service status messages with the server computer (1100, 1305).

## Patentansprüche

1. Ein Server-Computer (1100, 1305) einer Anordnung von Server-Computern, aufweisend:
mindestens einen Anwendungsserver (208, 1101), der so konfiguriert ist, dass er eine Anwendung für ein oder mehrere Mobilkommunikationsendgeräte (102, 201, 1304) bereitstellt, die über ein Funkzugangsnetz (103, 202, 1301) eines Mobilkommunikationsnetzes auf den Anwendungsserver (208, 1101) zugreifen; und
eine Benachrichtigungsschnittstelle (1102), die so konfiguriert ist, dass sie eine Kernnetzkomponente (501) des Mobilkommunikationsnetzes (1300) über einen anderen Server-Computer der Anordnung von Server-Computern benachrichtigt, den das Mobilkommunikationsnetz (1300) als Backup für die Bereitstellung der Anwendung an das eine oder die mehreren Mobilkommunikationsendgeräte (102, 201, 1304) verwenden kann, falls der Server Computer (1100, 1305) nicht in der Lage ist, die Anwendung für das eine oder die mehreren Mobilkommunikationsendgeräte (102, 201, 1304) mit einem vorbestimmten Qualitätsniveau bereitzustellen.

2. Der Server-Computer (1100, 1305) nach Anspruch 1, wobei die Benachrichtigungsschnittstelle (1102) so konfiguriert ist, dass sie die Kernnetzkomponente (501) des Mobilkommunikationsnetzes (1300) über einen anderen Anwendungsserver benachrichtigt, der von dem anderen Server-Computer bereitgestellt wird, wobei das Mobilkommunikationsnetz (1300) den anderen Anwendungsserver als Backup für die Bereitstellung der Anwendung für das eine oder die mehreren Mobilkommunikationsendgeräte (102, 201, 1304) verwenden kann, falls der Server-Computer (1100, 1305) die Anwendung nicht mit dem vorbestimmten Qualitätsniveau bereitstellt.

3. Der Server-Computer (1100, 1305) nach Anspruch 1 oder 2, wobei die Benachrichtigungsschnittstelle (1102) so konfiguriert ist, dass sie die Kernnetzkomponente (501) des Mobilkommunikationsnetzes (1300) benachrichtigt, dass der andere Server-Computer mit dem Server-Computer (1100, 1305) synchronisiert werden sollte, um als Backup für die Bereitstellung der Anwendung für das eine oder die mehreren Mobilkommunikationsendgeräte (102, 201, 1304) dienen zu können.

4. Der Server-Computer (1100, 1305) nach einem der Ansprüche 1 bis 3, wobei die Benachrichtigungsschnittstelle (1102) so konfiguriert ist, dass sie die Kernnetzkomponente (501) des Mobilkommunikationsnetzes (1300) benachrichtigt, dass ein anderer Anwendungsserver des anderen Server-Computers mit dem Anwendungsserver (208, 1101) synchronisiert werden sollte, um als Backup für die Bereitstellung der Anwendung für das eine oder die mehreren Mobilkommunikationsendgeräte (102, 201, 1304) dienen zu können.

5. Der Server-Computer (1100, 1305) nach einem der Ansprüche 1 bis 4, wobei das vorgegebene Qualitätsniveau darin besteht, dass der Server-Computer (1100, 1305) die Anwendung überhaupt für das eine oder die mehreren Mobilkommunikationsendgeräte (102, 201, 1304) bereitstellen kann.

6. Der Server-Computer (1100, 1305) nach einem der Ansprüche 1 bis 5, wobei die Server-Computer (1100, 1305) der Anordnung von Server-Computern Edge-Knoten (205) implementieren.

7. Ein Verfahren zur Bereitstellung einer Anwendung für ein oder mehrere Mobilkommunikationsendgeräte (102, 201, 1304), aufweisend:
Bereitstellen des Zugriffs auf einen Server-Computer (1100, 1305) einer Anordnung von Server-Computern, die eine Anwendung bereitstellen (1201), für das eine oder die mehreren Mobilkommunikationsendgeräte (102, 201, 1304), die auf den Anwendungsserver (208, 1101) über ein Funkzugangsnetz (103, 202, 1301) eines Mobilkommunikationsnetzes (1300) zugreifen; und
Benachrichtigen (1202) einer Kernnetzkomponente (501) des Mobilkommunikationsnetzes (1300) über einen anderen Server-Computer der Anordnung von Server-Computern, den das Mobilkommunikationsnetz (1300) als Backup zum Bereitstellen der Anwendung für das eine oder die mehreren Mobilkommunikationsendgeräte (102, 201, 1304) verwenden kann, falls der Server-Computer (1100, 1305) die Anwendung für das eine oder die mehreren Mobilkommunikationsendgeräte (102, 201, 1304) nicht mit einem vorgegebenen Qualitätsniveau bereitstellt.

8. Ein Mobilkommunikationsnetz (1300), aufweisend:
ein Funkzugangsnetz (103, 202, 1301), das so konfiguriert ist, dass es eine Verbindung zwischen einem oder mehreren Mobilkommunikationsendgeräten (102, 201, 1304) und einem Server-Computer (1100, 1305) einer Anordnung von Server-Computern zur Bereitstellung einer Anwendung für das eine oder die mehreren Mobilkommunikationsendgeräte (102, 201, 1304) bereitstellt;
einen Empfänger (1302), der so konfiguriert ist, dass er von dem Server-Computer (1100, 1305) der Anordnung von Server-Computern eine Benachrichtigung über einen anderen Server-Computer der Anordnung von Server-Computern empfängt, den das Mobilkommunikationsnetz (1300) als Backup für die Bereitstellung der Anwendung für das eine oder die mehreren Mobilkommunikationsendgeräte (102, 201, 1304) verwenden kann, falls der Server-Computer (1100, 1305) die Anwendung nicht mit einem vorbestimmten Qualitätsniveau bereitstellt, wobei der Empfänger (1302) eine Komponente einer Kernnetzkomponente (501) des Mobilkommunikationsnetzes (1300) ist; und
eine Steuereinrichtung (1303), die so konfiguriert ist, dass er das Funkzugangsnetz (103, 202, 1301) steuert, um eine Verbindung zu dem anderen Server-Computer bereitzustellen, um die Anwendung für das eine oder die mehreren Mobilkommunikationsendgeräte (102, 201, 1304) bereitzustellen, falls der Server-Computer (1100, 1305) die Anwendung für das eine oder die mehreren Mobilkommunikationsendgeräte (102, 201, 1304) nicht mit dem vorbestimmten Qualitätsniveau bereitstellt; und
einen Detektor, der so konfiguriert ist, dass er detektiert, ob der Server-Computer (1100, 1305) die Anwendung für das eine oder die mehreren Mobilkommunikationsendgeräte (102, 201, 1304) mit der vorbestimmten Dienstgüte bereitstellen kann, indem er Dienstgüte-Statusmeldungen mit dem Server-Computer (1100, 1305) austauscht.

9. Das Mobilkommunikationsnetz (1300) nach Anspruch 8, wobei das vorbestimmte Qualitätsniveau darin besteht, dass der Server-Computer (1100, 1305 ) die Anwendung überhaupt für das eine oder die mehreren Mobilkommunikationsendgeräte (102, 201, 1304) bereitstellen kann, und wobei der Detektor ferner so konfiguriert ist, dass er detektiert, ob der Server-Computer (1100, 1305) die Anwendung überhaupt für das eine oder die mehreren Mobilkommunikationsendgeräte (102, 201, 1304) bereitstellen kann, indem er Gesundheitsprüfungsnachrichten (903) und Gesundheitsbestätigungsnachrichten (904) mit dem Server-Computer (1100, 1305) austauscht.

10. Das Mobilkommunikationsnetz (1300) nach Anspruch 8 oder 9, wobei die Steuereinrichtung so konfiguriert ist, dass sie das Funkzugangsnetz (103, 202, 1301) so steuert, dass ein inaktiver Backup-Pfad zu dem anderen Server-Computer eingerichtet wird, um die Anwendung für das eine oder die mehreren Mobilkommunikationsendgeräte (102, 201, 1304) bereitzustellen, und dass der Backup-Pfad auf aktiv geschaltet wird, falls der Server-Computer (1100, 1305) die Anwendung nicht mit dem vorgegebenen Qualitätsniveau bereitstellt.

11. Das Mobilkommunikationsnetz (1300) nach einem der Ansprüche 8 bis 10, wobei die Benachrichtigung Informationen darüber enthält, dass der andere Server-Computer mit dem Server-Computer (1100, 1305) synchronisiert werden sollte, um als Backup für die Bereitstellung der Anwendung für das eine oder die mehreren Mobilkommunikationsendgeräte (102, 201, 1304) synchronisiert werden sollte, um als Backup für die Bereitstellung der Anwendung für das eine oder die mehreren Mobilkommunikationsendgeräte (102, 201, 1304) dienen zu können, und das Mobilkommunikationsnetzwerk (1300) eine Synchronisierungskomponente umfasst, die konfiguriert ist, um den Server-Computer (1100, 1305) mit dem anderen Server-Computer zu synchronisieren, wenn der andere Server-Computer mit dem Server-Computer (1100, 1305) synchronisiert werden sollte, um als Backup für die Bereitstellung der Anwendung für das eine oder die mehreren Mobilkommunikationsendgeräte (102, 201, 1304) dienen zu können.

12. Ein Verfahren zur Bereitstellung eines oder mehrerer mobiler Kommunikationsendgeräte (102, 201, 1304) mit Zugriff auf einen Server Computer (1100, 1305) einer Anordnung von Server-Computern, aufweisend:
Bereitstellen (1401) einer Verbindung zwischen dem einen oder den mehreren Mobilkommunikationsendgeräten (102, 201, 1304) und dem Server-Computer (1100, 1305) zum Bereitstellen einer Anwendung für das eine oder die mehreren Mobilkommunikationsendgeräte (102, 201, 1304) durch ein Funkzugangsnetz (103, 202, 1301) eines Mobilkommunikationsnetzes (1300);
Empfangen (1402) von dem Server-Computer (1100, 1305) der Anordnung von Server-Computern an einer Kernnetzkomponente des Mobilnetzes einer Benachrichtigung über einen anderen Server-Computer der Anordnung von Server-Computern, den das Mobilkommunikationsnetz (1300) als Backup für die Bereitstellung der Anwendung an das eine oder die mehreren Mobilkommunikationsendgeräte (102, 201, 1304) verwenden kann, falls der Server-Computer (1100, 1305) die Anwendung nicht mit einem vorbestimmten Qualitätsniveau bereitstellt;
Steuern (1403) des Funkzugangsnetzes (103, 202, 1301), um eine Verbindung zu dem anderen Server-Computer bereitzustellen, um die Anwendung für das eine oder die mehreren Mobilkommunikationsendgeräte (102, 201, 1304) bereitzustellen, falls der Server-Computer (1100, 1305) die Anwendung für das eine oder die mehreren Mobilkommunikationsendgeräte (102, 201, 1304) nicht mit dem vorgegebenen Qualitätsniveau bereitstellt; und
Detektieren, ob der Server-Computer (1100, 1305) die Anwendung für das eine oder die mehreren Mobilkommunikationsendgeräte (102, 201, 1304) mit der vorbestimmten Dienstgüte bereitstellen kann, indem Dienstgüte-Statusmeldungen mit dem Server-Computer (1100, 1305) ausgetauscht werden.

## Revendications

1. Ordinateur serveur (1100, 1305) d'un ensemble d'ordinateurs serveurs, comprenant :
au moins un serveur d'application (208, 1101) configuré pour fournir une application à un ou plusieurs terminaux de communication mobile (102, 201, 1304) accédant au serveur d'application (208, 1101) via un réseau d'accès radio (103, 202, 1301) d'un réseau de communication mobile (1300) ; et
une interface de notification (1102) configurée pour notifier à un composant de réseau central (501) du réseau de communication mobile (1300) l'existence d'un autre ordinateur serveur de l'ensemble d'ordinateurs serveurs que le réseau de communication mobile (1300) peut utiliser comme sauvegarde pour fournir l'application audit un ou auxdits plusieurs terminaux de communication mobile (102, 201, 1304) au cas où l'ordinateur serveur (1100, 1305) ne parviendrait pas à fournir l'application audit un ou auxdits plusieurs terminaux de communication mobile (102, 201, 1304) à un niveau de qualité prédéfini.

2. Ordinateur serveur (1100, 1305) selon la revendication 1, dans lequel l'interface de notification (1102) est configurée pour notifier au composant de réseau central (501) du réseau de communication mobile (1300) l'existence d'un autre serveur d'application fourni par l'autre ordinateur serveur, le réseau de communication mobile (1300) pouvant utiliser l'autre serveur d'application comme sauvegarde pour fournir l'application audit un ou auxdits plusieurs terminaux de communication mobile (102, 201, 1304) au cas où l'ordinateur serveur (1100, 1305) ne parviendrait pas à fournir l'application au niveau de qualité prédéfini.

3. Ordinateur serveur (1100, 1305) selon la revendication 1 ou 2, dans lequel l'interface de notification (1102) est configurée pour notifier au composant de réseau central (501) du réseau de communication mobile (1300) que l'autre ordinateur serveur doit être synchronisé avec l'ordinateur serveur (1100, 1305) afin de pouvoir servir de sauvegarde pour fournir l'application audit un ou auxdits plusieurs terminaux de communication mobile (102, 201, 1304).

4. Ordinateur serveur (1100, 1305) selon l'une quelconque des revendications 1 à 3, dans lequel l'interface de notification (1102) est configurée pour notifier au composant de réseau central (501) du réseau de communication mobile (1300) qu'un autre serveur d'application de l'autre ordinateur serveur devrait être synchronisé avec le serveur d'application (208, 1101) afin de pouvoir servir de sauvegarde pour fournir l'application audit un ou auxdits plusieurs terminaux de communication mobile (102, 201, 1304).

5. Ordinateur serveur (1100, 1305) selon l'une quelconque des revendications 1 à 4, dans lequel le niveau de qualité prédéfini est que l'ordinateur serveur (1100, 1305) peut fournir l'application audit un ou auxdits plusieurs terminaux de communication mobile (102, 201, 1304) du tout.

6. Ordinateur serveur (1100, 1305) selon l'une quelconque des revendications 1 à 5, dans lequel les ordinateurs serveurs (1100, 1305) de l'ensemble d'ordinateurs serveurs mettent en œuvre des nœuds de périphérie (205).

7. Procédé de fourniture d'une application à un ou plusieurs terminaux de communication mobile (102, 201, 1304), comprenant :
la fourniture d'accès à un ordinateur serveur (1100, 1305) d'un ensemble d'ordinateurs serveurs fournissant (1201) une application audit un ou auxdits plusieurs terminaux de communication mobile (102, 201, 1304) accédant au serveur d'application (208, 1101) via un réseau d'accès radio (103, 202, 1301) d'un réseau de communication mobile (1300) ; et
la notification (1202) à un composant de réseau central (501) du réseau de communication mobile (1300) de l'existence d'un autre ordinateur serveur de l'ensemble d'ordinateurs serveurs que le réseau de communication mobile (1300) peut utiliser comme sauvegarde pour fournir l'application audit un ou auxdits plusieurs terminaux de communication mobile (102, 201, 1304) au cas où l'ordinateur serveur (1100, 1305) ne parviendrait pas à fournir l'application audit un ou auxdits plusieurs terminaux de communication mobile (102, 201, 1304) à un niveau de qualité prédéfini.

8. Réseau de communication mobile (1300), comprenant :
un réseau d'accès radio (103, 202, 1301) configuré pour fournir une connexion entre un ou plusieurs terminaux de communication mobile (102, 201, 1304) et un ordinateur serveur (1100, 1305) d'un ensemble d'ordinateurs serveurs pour fournir une application audit un ou auxdits plusieurs terminaux de communication mobile (102, 201, 1304) ;
un récepteur (1302) configuré pour recevoir de l'ordinateur serveur (1100, 1305) de l'ensemble d'ordinateurs serveurs une notification de l'existence d'un autre ordinateur serveur de l'ensemble d'ordinateurs serveurs que le réseau de communication mobile (1300) peut utiliser comme sauvegarde pour fournir l'application audit un ou auxdits plusieurs terminaux de communication mobile (102, 201, 1304) au cas où l'ordinateur serveur (1100, 1305) ne parviendrait pas à fournir l'application à un niveau de qualité prédéfini, dans lequel le récepteur (1302) est un composant d'un composant de réseau central (501) du réseau de communication mobile (1300) ;
un contrôleur (1303) configuré pour contrôler le réseau d'accès radio (103, 202, 1301) afin de fournir une connexion à l'autre ordinateur serveur pour fournir l'application audit un ou auxdits plusieurs terminaux de communication mobile (102, 201, 1304) au cas où l'ordinateur serveur (1100, 1305) ne parviendrait pas à fournir l'application audit un ou auxdits plusieurs terminaux de communication mobile (102, 201, 1304) au niveau de qualité prédéfini ; et
un détecteur configuré pour détecter si l'ordinateur serveur (1100, 1305) peut fournir l'application audit un ou auxdits plusieurs terminaux de communication mobile (102, 201, 1304) au niveau de qualité de service prédéfini en échangeant des messages d'état de qualité de service avec l'ordinateur serveur (1100, 1305).

9. Réseau de communication mobile (1300) selon la revendication 8, dans lequel le niveau de qualité prédéfini est que l'ordinateur serveur (1100, 1305) peut fournir l'application audit un ou auxdits plusieurs terminaux de communication mobile (102, 201, 1304) du tout et dans lequel le détecteur est en outre configuré pour détecter si l'ordinateur serveur (1100, 1305) peut fournir l'application audit un ou auxdits plusieurs terminaux de communication mobile (102, 201, 1304) du tout en échangeant des messages de contrôle de santé (903) et des messages de reconnaissance de santé (904) avec l'ordinateur serveur (1100, 1305).

10. Réseau de communication mobile (1300) selon la revendication 8 ou 9, dans lequel le contrôleur est configuré pour commander le réseau d'accès radio (103, 202, 1301) afin d'établir un chemin de sauvegarde inactif vers l'autre ordinateur serveur pour fournir l'application audit un ou auxdits plusieurs terminaux de communication mobile (102, 201, 1304) et pour basculer le chemin de sauvegarde sur actif au cas où l'ordinateur serveur (1100, 1305) ne parviendrait pas à fournir l'application au niveau de qualité prédéfini.

11. Réseau de communication mobile (1300) selon l'une quelconque des revendications 8 à 10, dans lequel la notification comprend une information selon laquelle l'autre ordinateur serveur doit être synchronisé avec l'ordinateur serveur (1100, 1305) afin de pouvoir servir de sauvegarde pour fournir l'application audit un ou auxdits plusieurs terminaux de communication mobile (102, 201, 1304) et le réseau de communication mobile (1300) comprend un composant de synchronisation configuré pour synchroniser l'ordinateur serveur (1100, 1305) avec l'autre ordinateur serveur si l'autre ordinateur serveur doit être synchronisé avec l'ordinateur serveur (1100, 1305) afin de pouvoir servir de sauvegarde pour fournir l'application audit un ou auxdits plusieurs terminaux de communication mobile (102, 201, 1304).

12. Procédé pour fournir à un ou plusieurs terminaux de communication mobile (102, 201, 1304) de l'accès à un ordinateur serveur (1100, 1305) d'un ensemble d'ordinateurs serveurs, comprenant :
fournir (1401) une connexion entre ledit un ou lesdits plusieurs terminaux de communication mobile (102, 201, 1304) et l'ordinateur serveur (1100, 1305) pour fournir une application audit un ou auxdits plusieurs terminaux de communication mobile (102, 201, 1304) par un réseau d'accès radio (103, 202, 1301) d'un réseau de communication mobile (1300) ;
recevoir (1402) de l'ordinateur serveur (1100, 1305) de l'ensemble d'ordinateurs serveurs à un composant de réseau central du réseau mobile une notification de l'existence d'un autre ordinateur serveur de l'ensemble d'ordinateurs serveurs que le réseau de communication mobile (1300) peut utiliser comme sauvegarde pour fournir l'application audit un ou auxdits plusieurs terminaux de communication mobile (102, 201, 1304) au cas où l'ordinateur serveur (1100, 1305) ne parviendrait pas à fournir l'application à un niveau de qualité prédéfini ;
contrôler (1403) le réseau d'accès radio (103, 202, 1301) pour fournir une connexion à l'autre ordinateur serveur afin de fournir l'application audit un ou auxdits plusieurs terminaux de communication mobile (102, 201, 1304) au cas où l'ordinateur serveur (1100, 1305) ne parviendrait pas à fournir l'application audit un ou auxdits plusieurs terminaux de communication mobile (102, 201, 1304) au niveau de qualité prédéfini ; et
détecter si l'ordinateur serveur (1100, 1305) peut fournir l'application audit un ou auxdits plusieurs terminaux de communication mobile (102, 201, 1304) au niveau de qualité de service prédéterminé en échangeant des messages d'état de qualité de service avec l'ordinateur serveur (1100, 1305).
